# EUROPEAN PATENT APPLICATION

(11) **EP 4 769 245 A1**
(43) Date of publication of application: **01.07.2026**
(21) Application number: 25227077.2
(22) Date of filing: 23.12.2025
(51) Int. Cl.: G06N 10/60

(54) **QUANTUM ENHANCED MISINFORMATION DETECTION AND PREVENTION**

(30) Priority: 30.12.2024 US 202419005827
(71) Applicant: American Express Travel Related Services Co., Inc., New York, NY 10285-4900 (US)
(72) Inventor: PALANKI, Hiranmayi, New York, 10285-4900 (US); HANCOCK III, John Thomas, New York, 10285-4900 (US)
(74) Representative: Marks & Clerk LLP

(57) **Abstract**

System, method, and computer program product embodiments detect misinformation based on received inferencing data that includes textual or media content. A data vector is derived from one or more samples of the inferencing data. Quantum computing hardware is commanded to select a plurality of features of the data vector using a quantum approximate optimization algorithm (QAOA). Quantum computing hardware is commanded to classify the inferencing data as one of misinformation or genuine information using a quantum support vector machine (QSVM) provided with the selected plurality of features of the data vector. A signal based on the classification is received, and based on the signal indicating that the classification made by the QSVM is indicative that the content includes misinformation, a notification or alert to a human user or an automated system is generated, warning that the content includes misinformation.

## Description

### BACKGROUND

### Field

This application generally relates to systems for detecting and preventing the use and spread of misinformation, and in particular to quantum enhanced misinformation detection and prevention.

### Related Art

In the context of data security and cyber protection, misinformation is deliberately or inadvertently disseminated false, inaccurate, or misleading information designed to deceive, confuse, or mislead individuals or systems, potentially undermining the confidentiality, integrity, or availability of data, systems, or operations. Misinformation may involve fabrications or omissions, or the misrepresentation of legitimate data. Impacts to confidentiality can include encouraging improper disclosure of sensitive data. Impacts to integrity can include misleading actions that corrupt or alter data or systems. Impacts to availability can include misleading tactics that disrupt access to systems or services. Misinformation can be disseminated via email or text message (e.g., in messages posing as being from legitimate entities), telephonic messages, or documents, images, or videos posted to the internet or to private networks, as examples. Misinformation can include false security alerts encouraging harmful actions, or incorrect vulnerability reports that divert attention from real threats, as examples.

Disinformation is a category of misinformation in which information is deliberately inaccurate and is spread with the aim of accomplishing some harmful goal. The DISARM Foundation defines disinformation as "the deliberate attempt to influence perception and decision making by presenting information that is incomplete, incorrect, or out of context." As used herein, "misinformation" includes disinformation.

### BRIEF SUMMARY

Disclosed herein are system, apparatus, device, method and/or computer program product embodiments, and/or combinations and sub-combinations thereof, for training and inferencing of a misinformation detection classifier model capable of determining whether inferencing data, which can include textual data, media data, and/or multimodal data, is genuine information or misinformation. Computer-implemented methods, systems, and non-transitory computer-readable devices as described herein can make use of quantum computing to provide speed advantages, can incorporate a variety of source-associated metadata as misinformation indicators of compromise, can make use of quantum feature selection via a quantum approximate optimization algorithm, can use a quantum support vector machine for classification of misinformation, and can use Grover's search and a quantum database to speed the detection of misinformation. In these ways, the computer-implemented methods, systems, and non-transitory computer-readable devices as described herein can help prevent the spread of misinformation, including misinformation targeted towards the financial sector, which can have an outsized impact on markets and the economy. System, method, and computer program product embodiments as described herein can be employed to address problems associated with misinformation or disinformation propagating by email, direct message, and in social media, thus reducing costs associated with reputational damage.

### BRIEF DESCRIPTION OF THE DRAWINGS

The accompanying drawings are incorporated herein and form a part of the specification.
FIG. 1 is a flow diagram illustrating an example misinformation detection model training and deployment method.
FIG. 2 is a flow diagram illustrating an example misinformation quantum feature selection method.
FIG. 3 is a diagram illustrating an example quantum approximate optimization algorithm circuit arrangement for optimization of misinformation feature selection.
FIG. 4 is a flow diagram illustrating an example method performed by a quantum circuit for misinformation feature selection using a quantum approximate optimization algorithm.
FIG. 5 is an example hyperplane separation diagram.
FIG. 6 is a block diagram illustrating an example arrangement for quantum misinformation detection model supervised training.
FIG. 7 is a block diagram illustrating an example arrangement for use of a quantum misinformation detection model in production or testing.
FIG. 8 is a flow diagram illustrating an example method of misinformation detection using Grover's search.
FIG. 9 is a flow diagram illustrating an example method of quantum misinformation detection.
FIG. 10 is a block diagram illustrating an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof for training and inferencing of a misinformation detection classifier model capable of determining whether inferencing data, which can include media data and/or multimodal data, is genuine or misinformation.

Advances in the development of machine-learning-based systems such as large language models (LLMs) have enabled the generation of misinformation with new levels of verisimilitude, speed, personalization, and reach. For example, LLM-based machine tools can be used create messages that seem to be in the unique styles or personal literary voices of specific real individuals, such as project or enterprise leaders (e.g., C-suite officers, such as chief executive officers). Furthermore, LLM-based machine tools can be used not only to create messages that seem to be from specific real individuals, but also using specific styles or tones that would be used by those specific real individuals to communicate with other specific real individuals, thus making them especially deceptive to the recipients. Decisions based on misinformation can incur financial losses. The dissemination of misinformation can cause reputational damage and/or consumer, organizational, or societal confusion.

Misinformation in the era LLMs thus can present brand damage risks, financial loss risks, and cyber security risks to organizations, such as financial organizations. Misinformation can also pose threats to democratic and electoral systems, governments, and social fabrics. Detecting misinformation poses difficult technical challenges. Current state-of-the-art solutions for detecting misinformation do not effectively detect misinformation in a timely manner, but timeliness of detection is of the essence in preventing the impact and/or spread of misinformation, and thus to avoid reputational damage and/or economic or societal impact of the misinformation. For example, it would be preferable to be able to detect and flag likely misinformation in under one second, e.g., within a few milliseconds. Without advancing the speeds at which misinformation can be detected, it can be expected that misinformation will be generated (e.g., by threat actors) at such speeds and scales that it will overwhelm genuine message transmissions in volume and will make it difficult for individuals to determine what information they consume is genuine.

As synthetic misinformation generation technology develops and the verisimilitude of misinformation increases, misinformation poses growing threats to individuals, businesses, governments, social fabrics, and economies when used for hoax or financial fraud purposes, as examples. Threats from misinformation present a growing challenge for the financial sector, for example. With the advent of generative AI, easy-to-use misinformation creation techniques are more widely and less expensively available to malicious cyber actors, increasing the frequency and sophistication of misinformation attacks.

Threat adversaries may use misinformation to target customers, personnel (e.g., employees, contractors, and consultants), and highly-placed management executives (e.g., officers, directors, board members, etc.) in positions of authority or power of an enterprise organization. C-suite-level executives can present especially enticing misinformation targets for threat adversaries, because information accessible only by acquiring credentials having C-suite executive privileges can be especially sensitive and valuable, and/or because creating misinformation that can be falsely perceived to present statements or actions of such individuals can be especially reputationally damaging to the targeted individual or the enterprise organization's brand image and thus can have outsized effects on consumer and investor confidence and stock prices. The systems, methods, and computer-readable media described herein can be configured to provide security to information representing individuals, including customers, personnel, and executives, providing additional advantages over existing misinformation detection solutions.

In some embodiments, therefore, the systems, methods, and computer-readable devices described herein may receive inferencing data comprising content (e.g., a message, file, or stream) comprising at least one of textual data, audio data, image data, or video data. In some examples, inferencing metadata associated with a source of the message, file, or stream may also be received. A data vector derived from the content or from one or more samples of the content, and, in some examples, also derived from the inferencing metadata, can be transmitted to quantum computing hardware configured to select features from the data vector and perform quantum amplitude encoding of the selected features of the data vector into a set of qubits, which can be processed with a trained quantum support vector machine to produce a classification of the set of qubits as indicating that the file or stream is one of misinformation or genuine. Based on a signal indicating that the classification made by the quantum support vector machine is indicative that the message, file, or stream is misinformation, the systems, methods, and computer-readable devices described herein can generate a notification or alert to a human user or an automated system warning that the file or stream is classified as including (e.g., likely includes) misinformation.

In some examples, the systems, methods, and computer-readable devices described herein can enable misinformation detection model training that is based on misinformation indicators of compromise. Training metadata can be collected from a variety of sources, as described in greater detail below. The misinformation detection model can be implemented, for example, as a quantum support vector machine, trained using quantum computing hardware. In such examples, the training data can be encoded into qubits using quantum amplitude encoding.

In some examples, the systems, methods, and computer-readable devices described herein can include deployment of a trained misinformation detection model as part of a social network system or email or direct messaging (e.g., text messaging) spam/phishing filtering service. The trained misinformation detection model can address problems of dissemination of misinformation or disinformation on the social network or via email or direct messaging.

Various embodiments of these features are discussed with respect to the corresponding figures.

### Misinformation Indicators of Compromise

Embodiments as described herein can use certain data attributes or combinations of data attributes as misinformation indicators of compromise. These attributes can include the following information as associated with content (e.g., a message, media file, or stream). During a training phase, the attributes can be associated with a known or probable misinformation content and used as training or validation inputs for the training of a misinformation detection model. The misinformation detection model can, in some examples, be a quantum support vector machine. During a detection phase, the attributes can be associated with an item of suspected or potential misinformation content and used as inputs to a misinformation detection model. The attributes can include (a) a source Internet Protocol (IP) address; (b) a domain name, and/or WHOIS data associated with the domain name, and/or X.509 certificate information associated with the domain name; (c) a uniform resource locator (URL), and/or website, and/or repository (e.g., Github repository); (d) one or more request parameters (e.g., headers, cookies, body); (e) telemetry from a jailbroken, rooted, or tampered mobile device or a rogue mobile device application ("app"); (f) attempted phishing indicators (e.g., hidden form fields, obfuscated JavaScript code); (g) attempted attack indicators, such as data indicative of brute force attacks, account takeover attacks, credential stuffing, and/or credential cracking; (h) an IP or telephone number reputation indicator, a bot indicator, a Tor indicator, a virtual private network (VPN) indicator, an autonomous system number (ASN) indicator, and/or a user agent indicator; (i) failed authentication, authorization attempts, and/or tampered JavaScript Object Notation Web Token (JWT) tokens; and (j) a file or stream hash value. One or more of these factors can be used, for example, to fingerprint the IP address or domain name of a potential phishing domain or a rogue domain where misinformation might be created or published.

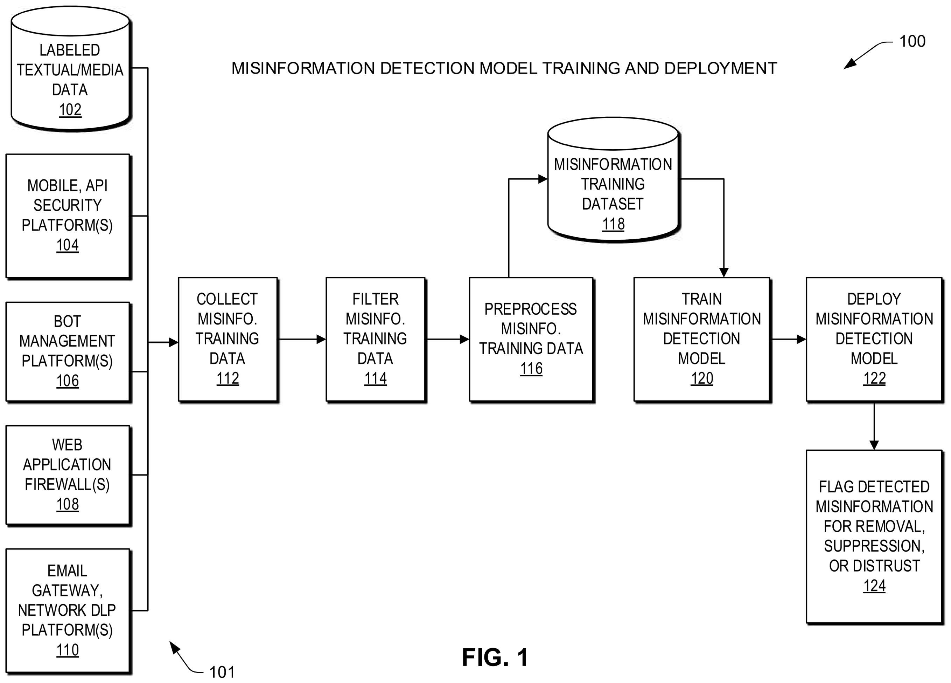

One or more data collection computer systems can be configured to capture and collect the above data, such as IP addresses, domains, URL, websites, repositories, and/or others of the data attributes. The data can be captured and collected from, as examples, a security platform 104 of a mobile application system and/or an application programming interface (API), from a bot management platform 106, from a web application firewall 108, and/or from one or more email gateways and/or network data loss prevention (DLP) platforms 110, as shown in FIG. 1. In some examples, the same or another one or more computer systems can compute one or more metrics related to misinformation indicators of compromise based on the captured and collected data. In some examples, the captured and collected data can be used to train a misinformation detection model.

One or more of the above-listed attributes, provided as metadata associated with a message, media file, or stream, can serve as misinformation indicators of compromise by indicating a correlation between known misinformation data and a publication or transmission source of suspected misinformation data. The publication or transmission source can be, as examples, one or more websites, URLs, phone numbers, IP addresses, and/or geographical locations. Reputation score data or telemetry data can thus be associated with such data provided as metadata associated with suspected misinformation data. This metadata can be used, in effect, as circumstantial evidence that suspected misinformation data is accurately assessed as misinformation data. A misinformation classifier model, e.g., a quantum support vector machine (QSVM), can be trained using misinformation indicators of compromise as training data to better perform classification of data associated with the metadata as misinformation or genuine and thus to alert to dangerous misinformation content.

The relevance of any one or more of the above-described misinformation indicators of compromise can be highly use case dependent. Some of the above attributes may be more applicable than others in different misinformation detection scenarios. As examples, in a scenario in which a video posted to social media is tested for misinformation indicators of compromise, or in a scenario in which a voice stream telephony number is tested for misinformation indicators of compromise, there may or may not be relevant attempted phishing or attack indicators or failed authentication indicators. In a scenario involving a misinformation sent via a phishing email, relevant misinformation indicators of compromise can include URL, domain, and/or IP address of origin of the email. Thus, different subsets of the above-described misinformation indicators of compromise may be more or less relevant depending on the particular misinformation use case.

In contrast to misinformation detection models trained only on certain sets of images, videos, audio recordings, or textual data, in examples described herein, comprehensive training datasets can include the above misinformation indicators of compromise as training data to a misinformation detection model. A misinformation detection model as described herein can be trained on a dark web dataset, which can include stolen or counterfeit credit card numbers, ransomware distributions, malware distributions, zero-day exploit distributions, hacking attempt data, and cryptocurrency data. A misinformation detection model as described herein can be trained on an authentication (authn) and authorization (authz) attacks dataset, which can include data regarding past account takeover attacks, credential stuffing attacks, credential cracking attacks, password spraying attacks, and/or brute force attacks. A misinformation detection model as described herein can be trained on an API attack dataset, which can include data regarding failed API authentication attempts, failed authorization attempts, tampered JWT tokens, request parameters (headers, cookies, body), IP and/or telephone number reputation, bot, Tor, VPN, ASN, and user agents.

A misinformation detection model as described herein can be trained on a phishing dataset, which can include IP address data, domain name data, WHOIS data, and/or X.509 certificate information for IP addresses or domains ascertained to be associated with phishing activity, as well as information pertaining to a URL, website, or repository where misinformation is published. A misinformation detection model as described herein can be trained on a mobile attack dataset, which can include jailbroken, rooted, or tampered mobile device telemetry, and/or rogue mobile app information. Such information can be useful in determining whether communications originate from or have transited through a compromised hardware device or a hardware device running compromised software.

A misinformation detection model as described herein can be trained on customer, personnel, or executive textual, image, audio, and video datasets, which can include messages, documents, images, audio recordings, and video recordings by or of legitimate internal organizational media and/or externally published media of customers, personnel, and/or executives associated with an enterprise organization. Properly labeled as such, certain ones of these files or streams can represent legitimate messages or recordings of human individuals, which can represent non-misinformation (genuine) examples to serve as negative class data in training data used to train the misinformation detection model. Properly labeled as such, others of these files or streams can represent misinformation examples to serve as positive class data in the training data used to train the misinformation detection model.

A misinformation detection model as described herein can be trained on a biometrics dataset, which can include identity verification data, e.g., data derived from fingerprint identity verification systems, facial identity verification systems, voice identity verification systems, retinal scan identity verification systems, textual style identity verification systems, and others. The biometrics dataset can further include heart rate, gait, and breathing information, e.g., sourced from wearable devices, which can also be used to verify identity.

A misinformation detection model as described herein can be trained on a network DLP dataset, which can include information pertaining to sensitive data exfiltration to rogue domains. A network DLP dataset can include various types of network traffic data, including normal traffic data describing legitimate data transfers and communication patterns within a network; malicious traffic data describing infiltration and exfiltration attempts, denial-of-service attacks, unauthorized scraping, or other misuse or misappropriation of network resources; and labels for the preceding data types, such as annotations indicating whether traffic is legitimate or malicious. The dataset can describe or include packet payloads, metadata such as IP addresses, ports, and protocols, and higher-level features derived from traffic patterns.

A misinformation detection model as described herein can be trained on a secure email gateway dataset, which can include information pertaining to targeted spam botnets, credential phishing, look-alike domains, domain spoofing, fake login pages, phishing URLs, emails with URLs to misinformation phishing sites, and malicious message bodies with misinformation and/or malware attachments. Commonly used in phishing attacks, look-alike domains resemble legitimate domains by using slight variations such as misspellings, additional characters, or visually similar characters in the domain name to trick human users into believing they are interacting with a legitimate site and cause them to enter sensitive information such as login credentials, personal data, or payment details. Domain spoofing involves impersonating a legitimate domain, e.g., by manipulating email headers or other communication protocols to make messages appear as though they originate from a trusted source.

A misinformation detection model as described herein can be trained on a model supply chain risk dataset, which can include information pertaining to data poisoning, model theft, and/or model evasion. Data poisoning and model evasion are similar types of attacks, but the former targets a training phase of ML model creation whereas model evasion targets an inferencing phase of an ML model deployed in production. Data poisoning is a type of attack in which an adversary injects misleading or malicious data into a training dataset of an ML model to corrupt the training process, thus altering the model itself. An ML model trained on poisoned data can make inaccurate or biased predictions or classifications and/or can produce biased, offensive, or erratic outputs. Model evasion is a type of attack in which an adversary manipulates inferencing input data to deceive a trained ML model into making incorrect predictions or classifications, without altering the model itself. Model evasion attacks are common in spam detection or fraud detection scenarios. The subtlety possible in data poisoning and model evasion attacks can make them difficult to detect and/or mitigate using conventional automated strategies. Model theft, also known as model extraction, is a type of attack in which an adversary aims to duplicate or replicate an ML model without obtaining possession of the model by systematically querying it with a large number of carefully chosen inputs and analyzing its outputs to extract its original training inputs and/or determine the model's structure, decision boundaries, and/or neural weights.

In the above datasets, data can be categorized and labeled as determined or probable misinformation data or as determined or probable genuine data. The labeling can be achieved by manual labeling, automated labeling, or a combination thereof.

### Misinformation Detection Model Training and Deployment

FIG. 1 illustrates an example method 100 of misinformation detection model training and deployment, including sources 101 of training data. At 112, training data is collected from the sources 101 of training data, including one or more datastores 102 of labeled textual or media data. In some examples, the training data can further be collected from one or more mobile and/or API security platforms 104, one or more bot management platforms 106, one or more web application firewalls 108, and/or one or more email gateway and/or network DLP platforms 110. The labeled textual or media data in the one or more datastores 102 can be labeled as positive class data (e.g., known misinformation) or negative class data (e.g., known genuine information). The labeled textual or media data in the one or more data stores 102 can be labeled by manual methods (e.g., human flagging of misinformation or genuine data as it is presented to a user), by automated methods, or by some combination of these. The training data sources 104, 106, 108, 110 can provide the types of training data related to misinformation indicators of compromise described above, as associated with media files or streams. The one or more data stores 102 can provide additional training data that does not include misinformation indicators of compromise, but may be associated with the misinformation indicators of compromise, which can be metadata to the data in the one or more data stores 102. The data collection at 112 can be an iterative process that collects new data from sources 101 as new data becomes available to further train and refine a misinformation detection model. At 114, the collected training data can be filtered to pass on only training data determined to be relevant to the misinformation detection model training method 100. Training data not relevant to the misinformation detection model training method 100 can be discarded in the training method by filtering in 114.

At 116, the collected and filtered training data can further be preprocessed to prepare the training data for the purpose of training the misinformation detection model. As one example of preprocessing in 116, privacy protection measures can be implemented by manipulating the misinformation data. For example, personally identifiable information (PII), protected health information (PHI), and payment card industry (PCI) information can be deleted or masked. In some examples, one or more differential privacy processes are employed. After preprocessing at 116, a misinformation training dataset 118 is created, and at 120, the misinformation detection model can then be trained on the filtered and preprocessed training data in the misinformation training dataset 118. At 122, the trained model can be deployed in a production environment to detect misinformation data and to take appropriate action based on the detection of misinformation data.

In some examples, at 124, textual information or media detected as misinformation by the misinformation detection model can be flagged, e.g., for deletion, removal, suppression, or accompanied display within an email or direct message delivery system or a social media network. In suppression from display, the detected-misinformation content is not deleted, but is reduced or eliminated from being provided in threads or feeds viewed by users. In accompanied display, the detected-misinformation content can be displayed in threads or feeds of users, but accompanied by caption text, a watermark, or similar notification alerting a consumer of the content that the content likely contains misinformation. The notification can include a recommendation that that the content not be understood as being genuine. For example, the flagging can be configured to permit the display of the misinformation (e.g., in an email or direct message thread or a social media network feed) but with the display accompanied by a label or warning or other information indicating that the textual information or media contains misinformation and is potentially misleading.

### Misinformation Quantum Feature Selection

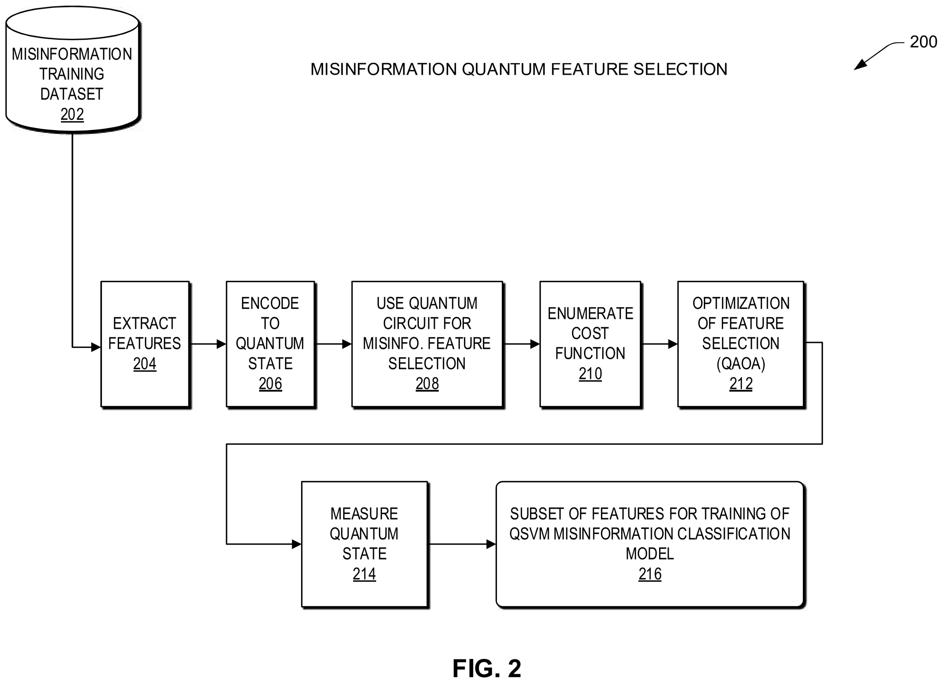

The flow diagram of FIG. 2 illustrates an example method 200 of misinformation quantum feature selection. A misinformation training dataset 202 can be generated as described above with regard to FIG. 1. Misinformation training dataset 202 can correspond, for example, to misinformation training dataset 118 shown in FIG. 1. Misinformation training dataset 202 can have labeled instances of both genuine information and misinformation. In some examples, misinformation training dataset 202 can also have metadata associated with its labeled genuine information and misinformation, the metadata being sourced, for example, from the various misinformation indicators of compromise described above.

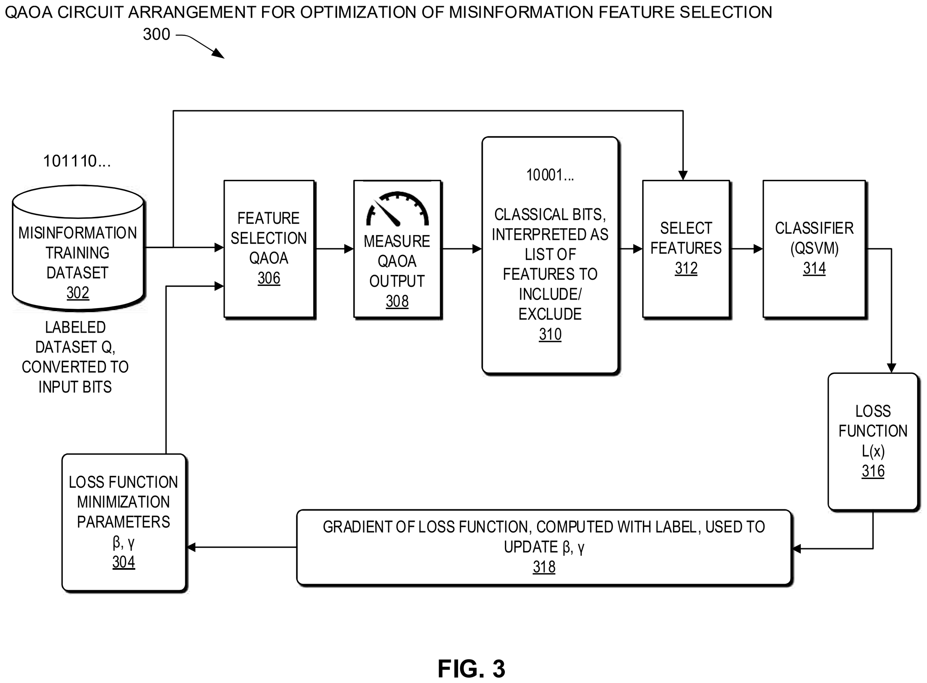

At 204, features are extracted from the misinformation training dataset 202. Feature extraction uses a technique to convert the content of the labeled misinformation or genuine information (e.g., textual information and/or image, video, and/or audio content) and associated metadata, if any, in misinformation training dataset 202 to numeric form. For example, data in the misinformation training dataset 202 can be converted to an embedding by projecting the data into an embedding space. The embedding can be, for example, a vector representative of a point in multidimensional space. Feature extraction at 204 results in a tabular data set, for example. Feature extraction, at 204, is distinct from feature selection, which is described in greater detail below with regard to elements 208 through 212 of FIG. 2 and FIG. 3. Feature extraction can be performed using classical computing hardware and techniques such as Word2Vec (word to vector), GloVe (global vectors for word representation), TF-IDF (term frequency-inverse document frequency), or transformer-based models such as BERT (bidirectional encoder representations from transformers) or GPT (generative pre-trained transformer), to name but a few examples.

At 206, extracted features are encoded to a quantum state. The quantum state encoding prepares the numerical data (e.g., embeddings) as input for feature selection. At 208, a quantum circuit is used to perform misinformation feature selection. For example, the quantum circuit can be configured to perform a quantum approximate optimization algorithm (QAOA), which uses a cost function, to perform feature selection. The QAOA provides an iterative process that can make use of a quantum advantage to execute faster than a classical computing algorithm. The QAOA can be used to select an subset of elements of the tabular data (generated by feature extraction at 204) that give an optimized or improved input for a machine learning algorithm (e.g., a quantum support vector machine) subsequently used to classify unlabeled test or production data as misinformation or genuine information. The QAOA works to choose a combination of inputs that is optimal or improved according to the given cost function. The optimality of the feature selection solution can be as governed by a number of QAOA iterations run. For example, an O(n) number of iterations can be run, where n is the number of data elements to be selected from. By contrast, a brute force method of selecting an optimal subset of data elements would have to iterate through all 2ⁿ possible subsets. At 210, a cost function is enumerated. At 212, feature selection is optimized or improved using the QAOA. At 214, the quantum states of the QAOA is measured. This measurement results in a subset of features for training of a QSVM misinformation classification model, at 216.

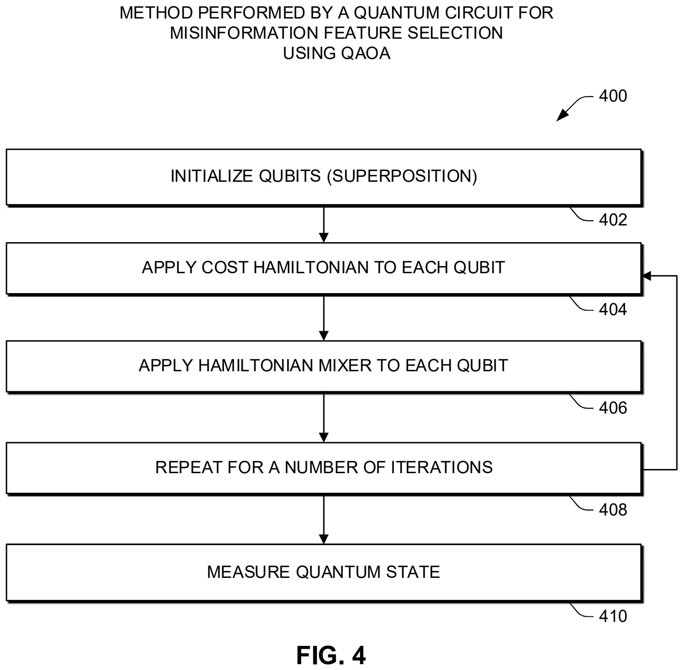

The functioning of the QAOA to perform feature selection is described in greater detail with regard to the flow diagram of FIG. 3, Listings 1 and 2 (below), and the flow diagram of FIG. 4.

FIG. 3 illustrates a QAOA circuit arrangement 300 for optimization or improvement of misinformation feature selection. Misinformation training dataset 302, which can correspond to misinformation training dataset 118 of FIG. 1 or misinformation training dataset 202 of FIG. 2, can include a labeled dataset, referred to as Q in Listing 1, that has been converted to input bits. At 306, the input bits are provided to feature selection QAOA, which can take the form of a quantum circuit, and the QAOA performs feature selection, as described in greater detail below with regard to Listings 1 and 2 and FIG. 4. The quantum circuit can have associated with it two cost minimization parameters β and γ 304, the values of which are altered during the course of the iterative process performed by the QAOA. At 306, then, the QAOA applies one round of feature selection optimization, and, at 308, the QAOA output is measured. This measurement gives a set of classical bits 310 that can be interpreted as a list of features to include or exclude.

Based on this set of classical bits 310, at 312, element numbers of data in the misinformation training dataset 302 that correspond, for example, to bit positions having a binary value of "1" in the classical bits 310 are selected. At 314, the selected subset of the data in the misinformation training dataset 302 is provided as input to a classifier, which can be, for example, a QSVM, and which can output a loss function L(x) 316. The loss function L(x) 316 is a performance metric that represents how well the classifier, at 314, performs, given the subset of the input selected at 312. At 318, the gradient of the loss function L(x) is used to update the cost minimization parameters β and γ 304, which are then provided back to the quantum circuit at 306. QAOA circuit arrangement 300 thus provides a feedback loop that can be used to iteratively select an optimal or improved subset of features at 312 in each iteration. During this iterative process, the value of the loss function L(x) improves with multiple iterations of the QAOA algorithm at 306.

The number of iterations may be selected so as to prevent overfitting. In some examples, the iterative process may be cut off when the loss function L(x) levels off, e.g., when the gradient of the loss function L(x) becomes zero or within some determined threshold close to zero. In some examples, the number of iterations may be selected as the number of selectable features in the data set (e.g., the number of binary elements in an embedding), with the understanding that approximately that many iterations will select an approximately optimal subset of features.

Listing 1, below, provides an example Qiskit program to find x that minimizes C(x). Listing 2, below, provides an example output of the example Qiskit program of Listing 1. In Listing 1, the Qiskit class QuadraticProgramToQubo is used to convert a given optimization problem with linear constraints to a new problem that is of quadratic unconstrained binary optimization (QUBO) form.

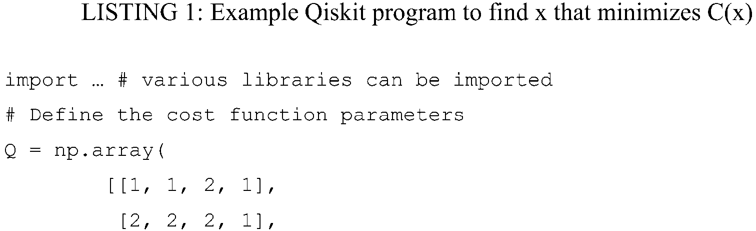

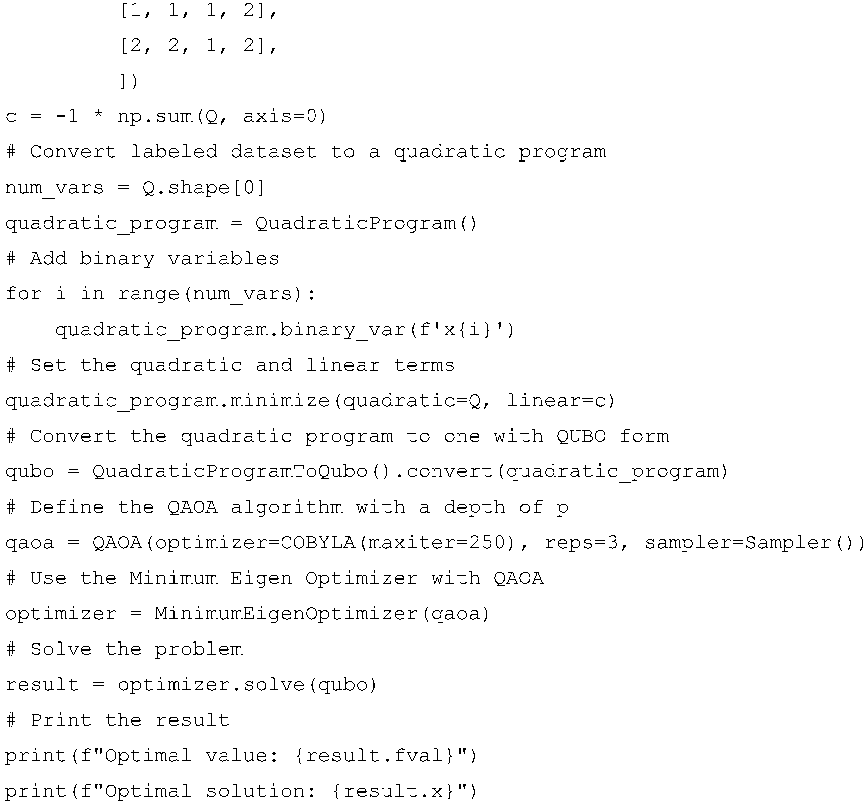

### LISTING 2: Output of Qiskit program of Listing 1

Optimal value: -7.0
Optimal solution: [1. 0. 1. 0.]

The output of the example Qiskit program of Listing 1 is the same value for x that can be found by manually calculating all the possible values of C(x) to discover which value of x minimizes C(x). In the example Qiskit program of Listing 1, a cost function is computed using the simple function np.sum as c = -1 * np.sum(Q, axis=0). This np.sum function stands in for the classifier at 314 of FIG. 3. In practice, a QSVM may be used as classifier at 314 to realize a quantum advantage associated therewith, e.g., a quadratic speedup versus a classical support vector machine. Omitted from explicit notation in Listing 1, for purposes of simplicity, is the updating of QAOA parameters β and γ, which, in Listing 1, can happen implicitly when optimizer.solve(qubo) is called.

The flow diagram of FIG. 4 illustrates an example method 400 performed by a quantum circuit for misinformation feature selection using QAOA. At 402, qubits are initialized by superposing input data. Each qubit represents a feature. Hadamard gates can be used, for example, for superposition of qubits. At 404, a cost Hamiltonian is applied to each qubit. At 406, a Hamiltonian mixer is applied to each qubit. At 408, the application of the cost Hamiltonian (at 304) and the application of the Hamiltonian mixer (at 406) is repeated for a number of iterations. The number of iterations can be selected, e.g., according to a time budget or a computational cost budget. For example, an O(n) number of iterations can be run, where n is the number of data elements to be selected from. After the iterations, at 410, a quantum state of the qubits is measured to obtain the selected subset of features as the output of the QAOA quantum circuit. The quantum circuit depicted by FIG. 4 can efficiently identify a subset of features, optimizing or improving the feature selection for better misinformation detection accuracy. The selected features can then used for misinformation classification via a QSVM, as described below.

### Quantum Support Vector Machine

A support vector machine can classify an embedding as belonging to one or another cluster of embeddings in an embedding space by separating different clusters of embeddings by a hyperplane, for example. A QSVM can perform such classification while also realizing speed and/or efficiency benefits due to the quantum advantage yielded from the operation on a superposition of states.

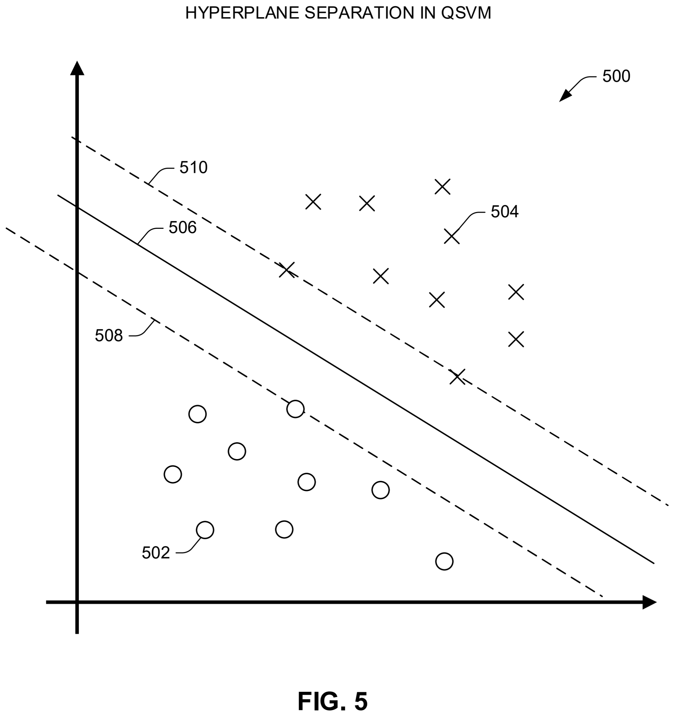

FIG. 5 illustrates example hyperplane separation diagram 500. The example diagram 500 is a two-dimensional diagram, but in practice, a QSVM can operate in embedding spaces of a larger number of dimensions. A training dataset includes both positive-class embeddings 502, represented in the diagram 500 as circles, and negative-class embeddings 504, represented in the diagram 500 as X's. For example, each positive-class embedding 502 can represent an instance of labeled misinformation, and each negative-class embedding 504 can represent an instance of labeled genuine information. A QSVM can find a hyperplane, represented in the diagram 500 as line 506, that separates the different classes of embeddings (instances of the training dataset) based on the distance of support vectors from the separating hyperplane 506 to the instances of the training dataset. For example, the QSVM can calculate a maximum margin separating the hyperplane 506, represented in FIG. 5 by margin lines 508 and 510, based on the support vectors, which are determined by their proximity to the instances of either class of the training data.

### Quantum Misinformation Detection Model Supervised Training and Use in Production/Testing

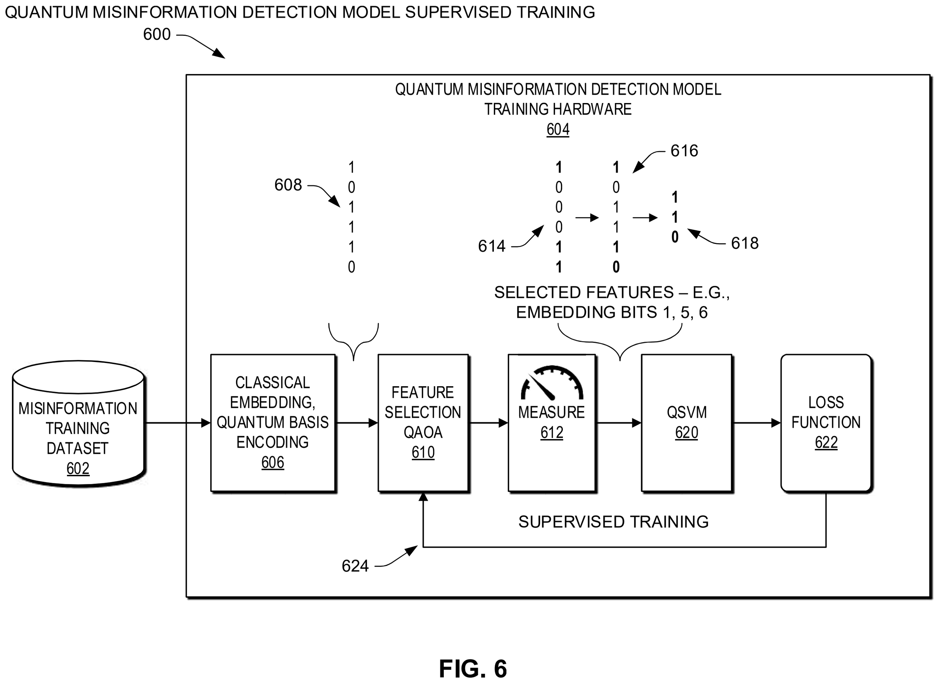

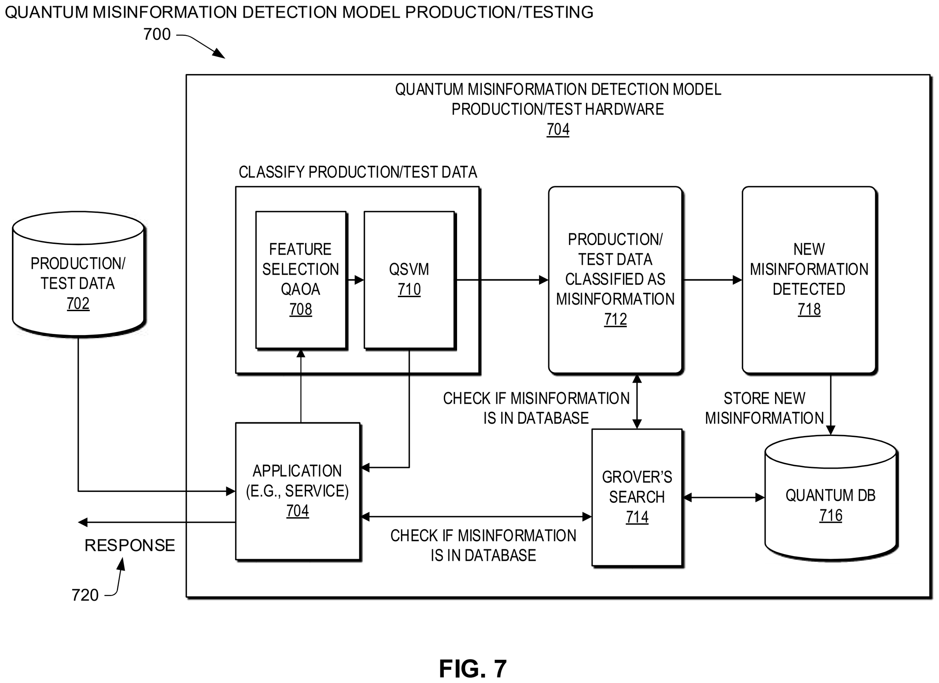

FIGS. 6 and 7 together illustrate an example end-to-end implementation of a system for quantum misinformation detection. The block diagram of FIG. 6 shows an example system 600 for quantum misinformation detection model supervised training. The block diagram of FIG. 7 shows an example system 700 implementing the trained quantum misinformation detection model in a production or testing environment, in which the trained quantum misinformation detection model can be used to classify information as misinformation or genuine information. During a training phase, as illustrated in FIG. 6, a QAOA is trained to determine an optimal (or improved) subset of features. In a production phase, as illustrated in FIG. 7, the trained QAOA can be used to determine a subset of production data. The determine subset is selected and provided to a trained QSVM. The production data can be, for example, information to be classified as misinformation or genuine information. Based on the QSVM classifying the data as misinformation, the classified data can be inserted into a quantum database that can be searched using a Grover's search. Thus, when new misinformation is detected, the quantum database can be updated for Grover's search. Independently or in parallel, an application can query the quantum database for misinformation. Systems 600 and 700 can each comprise a combination of classical and quantum computing hardware devices or systems configured to carry out the operations depicted in FIGS. 6 and 7, respectively, and as described below.

System 600 of FIG. 6 includes a misinformation training dataset 602, which can correspond to misinformation training dataset 118 of FIG. 1, misinformation training dataset 202 of FIG. 2, or misinformation training dataset 302 of FIG. 3. Misinformation training dataset 602 can provide labeled positive-class information (misinformation) and negative-class information (genuine information). System 600 further includes quantum misinformation detection model training hardware 604, which can include classical and quantum computing hardware configured to perform functions as illustrated at 606, 610, 612, and 620.

At 606, information from misinformation training dataset 602 is converted to embeddings by projecting each sample of training information into an embedding space. The embeddings conversion can be performed using classical computing hardware and techniques such as Word2Vec, GloVe, TF-IDF, or transformer-based models such as BERT or GPT, as but a few examples. Each instance of training data can thus be converted to a feature vector (an embedding), of which a six-bit example is shown at 608 as "101110." The illustrated example is simplified for the purposes of illustration. In practice, the training information feature vector for each training data instance may be, for example, more than fifty bits, e.g., about one hundred bits, or, in some examples, more than one hundred bits.

Also at 606, the training-data embeddings are converted from classical bits to qubits (quantum basis encoding). At 610, a QAOA can perform feature selection, as described above with regard to 306 in FIG. 3. At 612, the quantum output of the QAOA can be measured, as described above with regard to 308 in FIG. 3. The measurement at 612 has the effect of converting information in qubit form back to classical bit form. The measurement at 612 results in a binary vector of the same size as the input feature vector, each bit of which signifies whether a feature (binary value) in any given one of the training data input feature vectors should be selected for subsequent processing by the classifier or not. In the illustrated example, the QAOA output vector 614 is shown as "100011," where the binary 1's indicate that the first, fifth, and sixth values of each training data input feature vector should be selected. Example training data feature vector 608 is shown again at 618, with its first, fifth, and sixth values bolded to indicate the values selected according to the measured QAOA output. Only the corresponding selected values of the training data feature vector 608, forming a simplified embedding shown at 618 as "110," are provided to the classifier at 620. In practice, the size of the simplified embedding can be more than three values.

At 620, the selected values of each of the training data feature vectors (simplified embeddings) are provided to the classifier, which, in the illustrated example, is a QSVM. The QSVM at 620 can correspond, for example, to the classifier at 314 in FIG. 3. The QSVM outputs a classifier output labeling of each input simplified embedding, e.g., a binary labeling signifying either misinformation or genuine information. The classifier output labeling can be compared to a labeling of the corresponding training data instance from the misinformation training dataset 602 to produce a loss function 622, which can correspond, for example, to loss function 316 in FIG. 3. Via feedback loop 624, the loss function 622 can be used to update parameters β and γ in the feature selection QAOA at 610 to improve the selection of features over the course of iterative training performed by training hardware 604. If QAOA at 610 initially takes a more or less a random guess at which features to include, over a number of training iterations, the selection of features to include improves to reduce the loss function 622, indicating that the classifier output labeling of simplified embeddings performed by the QSVM at 620 better matches the labeling found in the misinformation training dataset 602 for a greater number of instances of training data feature vectors. When updated with each training iteration, improved values of the QAOA parameters β and γ tend to result in an improved selection of features from the training dataset for classification.

System 700 of FIG. 7 includes a source of production or test data 702 and quantum misinformation detection model production/test hardware 704, which can include classical computing hardware and quantum computing hardware. Quantum misinformation detection model production/test hardware 704 can be configured to run an application 704 (e.g., a service), which can be run by classical computing hardware, and can be, for example, a cloud-based service that can be called with a request (e.g., a secure hypertext transfer protocol request), process the request, and return a response to the request. The request can include, for example, an instance of production/test data desired to be classified as misinformation or genuine information. The response can include, for example, the requested classification.

As illustrated in FIG. 7, quantum misinformation detection model production/test hardware 704 is configured to perform two different processes independently (e.g., in parallel). In a first process of the two independent processes, quantum computing hardware of the quantum misinformation detection model production/test hardware 704 is configured to run a QAOA 708 and a QSVM 710 to classify production or test data 702 input to application 704 as misinformation or genuine information. QAOA 708 and QSVM 710 can function as described above with regard to FIGS. 3 and 6. QAOA 708 can, for example, use the parameters β and γ derived during training as described above with regard to FIG. 6.

Based on the output of the QSVM 710, application 704 can return a response 720 indicative of the classification of the provided production or test data 702 as misinformation or genuine information. Furthermore, if, at 712, based on the output of the QSVM 710, quantum misinformation detection model production/test hardware 704 determines that the production or test data 702 is classified as misinformation, then at 714, quantum misinformation detection model production/test hardware 704 performs a Grover's search of a quantum database 716 of misinformation to detect whether the misinformation in the production or test data includes "new" misinformation not already catalogued in the quantum database 716. At 718, based on determining that the misinformation in the production or test data 702 is new misinformation, the quantum misinformation detection model production/test hardware 704 adds the new misinformation to the quantum database 716. The quantum database 716 is thus continually updated with newly found misinformation.

In a second process of the two independent processes, at 714, quantum computing hardware of the quantum misinformation detection model production/test hardware 704 performs a Grover's search of the quantum database 716 of misinformation to detect whether the production or test data 702 provided to the application 704 is catalogued in the quantum database 716. Based on quantum misinformation detection model production/test hardware 704 determining that information in the provided production or test data 702 is found in the quantum database 716, application 704 can return a response 720 indicative of the positive classification of the provided production or test data 702 as including misinformation. This search, at 714, of the quantum database 716 may be faster and less processing intensive (e.g., less consumptive of quantum computing resources) than the classification performed in the first process of the two independent processes using feature selection QAOA 708 and QSVM 710.

Accordingly, if information in the provided production or test data 702 is found in the quantum database 716, then application 704 can return a response 720 indicative of the positive classification of the provided production or test data 702 as including misinformation with greater speed than if classification were to be performed using feature selection QAOA 708 and QSVM 710, and quantum misinformation detection model production/test hardware 704 can skip the step of performing classification using feature selection QAOA 708 and QSVM 710, as in the first process, for the particular production or test data 702 supplied to the application 704 with the request.

On the other hand, if, at 714, after a Grover's search of quantum database 716, quantum misinformation detection model production/test hardware 704 determines that information in the provided production or test data 702 is not found in the quantum database 716, this result cannot be regarded as a conclusive determination that the production or test data 702 provided to the application 704 in the request includes only genuine information. For example, absence of an entry in the quantum database 716 corresponding to the production or test data 702 may mean only that the production or test data 702 represents new misinformation not yet entered in the quantum database 716. Therefore, the production or test data 702 provided to the application 704 may be processed using feature selection QAOA 708 and QSVM 710 in accordance with the first process, as described above.

Quantum computing portions of quantum misinformation detection model training hardware 604 and/or quantum misinformation detection model production/test hardware 704 can, in some examples, include a quantum computing resource accessed via a representational state transfer (REST) API. The IBM Quantum Platform, accessible via a web browser, is an example of such a quantum computing resource. API calls to the quantum computing resource can be made to leverage quantum computing in a production environment.

In some examples, the quantum misinformation detection model production/test hardware 704 can be deployed to service an email, direct messaging, or chat filtering system, or to service a public or private social network. For example, the email, direct messaging, or chat filtering system or social network may be configured to transmit requests to the application 704, including production or test data 702, and to receive and make use of response 720 in determining whether to delete, suppress, or display (e.g., with an accompanied warning) information determined by the quantum misinformation detection model production/test hardware 704 as likely including misinformation. Misinformation published via systems or forums such as these can be damaging to individual or corporate reputations, can improperly influence democratic elections, or can foment social unrest, among other dangers.

In some examples, the quantum misinformation detection model production/test hardware 704 can be deployed to routinely scan text or media content transmitted to or by such systems or forums, classifying the text or media content as misinformation or genuine information, and flagging any such text or media content classified as misinformation. Text or media content flagged as misinformation can be deleted or suppressed from system or forum, or can be made to be accompanied by warnings or other notices when displayed to an end user. Such examples can otherwise operate consistent with the description provided above with regard to FIG. 7.

### Misinformation Detection Using Grover's Search

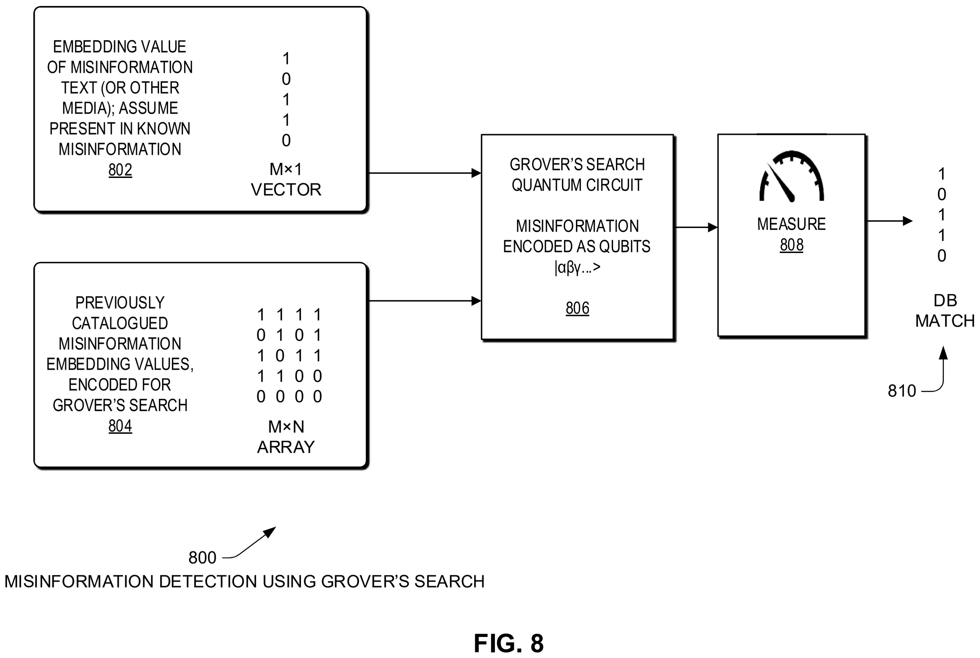

The flow diagram of FIG. 8 shows an example of misinformation detection using Grover's search, as may be used at 714 in FIG. 7. Box 802 shows the embedding value of misinformation content (e.g., text or other media). Grover's search returns a positive match based on the embedding value of box 802 being present in a catalogue of known misinformation, e.g., as may be stored in quantum database 716 shown in FIG. 7. Box 804 shows a set of previously catalogued misinformation embedding values that have been encoded for Grover's search. In the illustrated example, the search embedding, from box 802, is present as the second listed embedding in the catalogue of box 804. The encoded dataset, in box 804, is encoded in a collection of qubits having a joint state that is the tensor product of all the individual states of the individual qubits. The qubits of the encoded dataset are in superposition, enabling the encoding of a system such that the qubits of the encoded dataset are simultaneously in several states at the same time. The joint state of the system is in this superposition.

A Grover's search quantum circuit 806 can search the catalogue from box 804 for the search embedding from box 802. Grover's search functions by iteratively amplifying the amplitude of the target state, which, in the illustrated example, is a qubit encoding of the search embedding of box 802, from among the quantum-encoded values of the catalogue of box 804. Grover's search involves an oracle function that inverts one possible element of the joint state (the encoded state of box 804). Grover's search amplifies the state identified by the oracle function to check whether any element of the encoded state is equal to the pattern of bits of the search embedding, e.g., to check whether the search embedding (of box 802) is present in quantum database 716. Out of all the possible states that simultaneously exist in the encoded state (of box 804), the oracle function identifies the search embedding (of box 802), inverts that particular combination of bits, and amplifies it.

This process iterates a number of times, e.g., square root of N times, where N is the number of embedding values in the encoded state (of box 804), e.g., of entries stored in quantum database 716. After the number of iterations, the encoded state collapses to the one particular amplified state of the search embedding due to the oracle function. When the encoded values, from box 804, are measured, at 808, the probability of measuring bits equal to the search embedding, from box 802, approaches certainty, and the output of the measurement at 808 will be equal to the value queried for, from box 802, as indicated by database match 810. However, if the target (from box 802 in the illustrated example) is not present in the encoded state (from box 804 in the illustrated example), the value measured at 808 will not equal the value queried for.

### Methods, Systems, and Computer-Readable Media for Performing Quantum Misinformation Detection

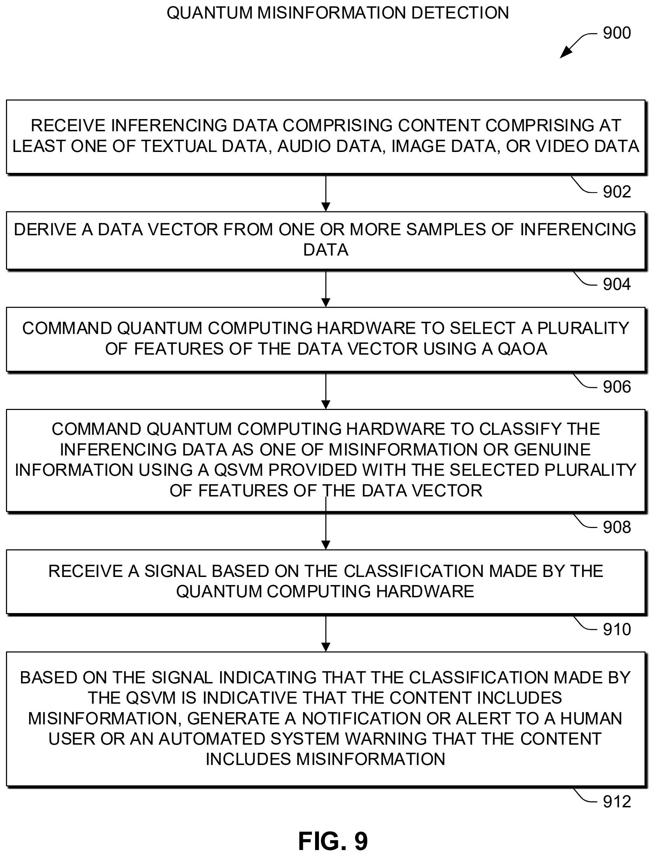

FIG. 9 shows an example computer-implemented method 900 of quantum misinformation detection. At 902, a computer processor receives inferencing data comprising content comprising at least one of textual data, audio data, image data, or video data. The inferencing data can be, for example, production/test data 702 in FIG. 7. At 904, the computer processor derives a data vector from one or more samples of the inferencing data. This step can correspond, for example, to the step of extracting features at 204 in FIG. 2. Not shown in FIG. 9, method 900 can also include a step of encoding the derived data vector to a quantum state, as at 206 of FIG. 6.

At 906, method 900 includes commanding quantum computing hardware to select a plurality of features of the data vector using a QAOA. The selection of the plurality of features can be performed, for example, by feature selection QAOA 708 of FIG. 7. In some examples, the QAOA can trained using labeled training data, for example, as described above with regard to FIGS. 3 and 6. For example, the training of the QAOA can include selecting a subset of features of the labeled training data. The selecting can include, as described above with regard to FIG. 4, encoding at least a portion of the labeled training data as a plurality of qubits, initializing the plurality of qubits in superposition with each other, applying a cost Hamiltonian to each of the plurality of qubits, applying a Hamiltonian mixer to each of the plurality of qubits, repeating the applying the cost Hamiltonian and the applying the Hamiltonian mixer to each of the plurality of qubits for a number of iterations, measuring a quantum state of the qubits to determine a feature selection vector, and selecting the subset of features of the labeled training data based on the feature selection vector. The training of the QAOA can then further include providing the selected subset of features of the labeled training data to the QSVM to determine a training classification. The training of the QAOA can then further include determining a loss function at least in part by comparing the training classification to a label of the labeled training data. The training of the QAOA can then further include adjusting loss function minimization parameters of the QAOA based on the loss function. The training of the QAOA can then further include repeating the selecting the subset of features of the labeled training data, the providing the selected subset of features of the labeled training data to the QSVM, the determining the loss function, and the adjusting the loss function minimization parameters a number of times. For example, the number of times can be equal to a number of binary elements in the data vector.

At 908, method 900 includes commanding the quantum computing hardware (or other quantum computing hardware) to classify the inferencing data as one of misinformation or genuine information using a QSVM, the QSVM being provided with the selected plurality of features of the data vector. The classification can be performed, for example, by QSVM 710 of FIG. 7.

At 910, method 900 can continue with the computer processor receiving a signal based on the classification made by the quantum computing hardware (or the other quantum computing hardware). The signal can be indicative of the classification made by the QSVM. At 912, a notification or alert to a human user or an automated system is generated based on the signal indicating that the classification made by the QSVM is indicative that the content includes misinformation, warning that the content includes misinformation. In some examples, the notification or alert can be used to automatically flag, delete, or suppress a misinformation email, direct message, or social media post, as examples.

In some examples, before the commanding the quantum computing hardware to select the plurality of features of the data vector using the QAOA at 906, quantum computing hardware can be commanded to perform a Grover's search for the data vector, or another data vector based on the data vector, in a quantum database storing embeddings corresponding to information classified as misinformation, to determine that the data vector, or the other data vector based on the data vector, is not in the quantum database based on the Grover's search. The quantum database can be, for example, quantum database 716 shown in FIG. 7. The commanding the quantum computing hardware to select the plurality of features of the data vector using the QAOA, at 906, can be based on the determining that the data vector, or the other data vector based on the data vector, is not in the quantum database.

In some examples, based on the signal indicating that the classification made by the QSVM is indicative that the content is misinformation at 912, quantum computing hardware can be commanded to perform a Grover's search for the data vector, or another data vector based on the data vector, in a quantum database storing embeddings corresponding to information classified as misinformation. The quantum database can be, for example, quantum database 716 shown in FIG. 7. Based on determining that the data vector, or the other data vector based on the data vector, is not in the quantum database based on the Grover's search, the data vector, or the other data vector based on the data vector, can be stored in the quantum database. As described above, this can provide a speed advantage for future determinations as to whether information is misinformation or genuine information. If the information appears in the quantum database, then it may be determined to be misinformation, without the need to process the information with the QAOA and QSVM and the associated quantum computational effort expenditure.

In some examples, the content, as referenced at 902, further includes inferencing metadata associated with a source of the content. As examples, the inferencing metadata can include one or more of a dark web threat indicator, an authentication indicator, an authorization indicator, or a bad bot threat indicator. In some examples, the inferencing metadata can sourced from one or more of a mobile or API security platform, a bot management platform, a web application firewall, an email gateway platform, or a network DLP platform.

Not all steps may be needed to perform implementations of the quantum misinformation detection methods provided herein. Further, some of the steps may be performed simultaneously, or in a different order than shown in FIG. 9. In some examples, a quantum misinformation detection system can include a memory and at least one processor (e.g., a classical-computing processor) coupled to the memory and configured to perform operations comprising operations 902, 904, 906, 908, 910, and 912 of method 900, while permitting a quantum computer to perform the feature selection and classification operations of steps 906 and 908 of method 900. In some examples, a non-transitory computer-readable device can have instructions stored thereon that, when executed by at least one computing device (e.g., a classical computing device), cause the at least one computing device to perform operations 902, 904, 906, 908, 910, and 912 of method 900, while permitting a quantum computer to perform the feature selection and classification operations of steps 906 and 908 of method 900.

### Computing Systems Useful in Performing Quantum Misinformation Detection

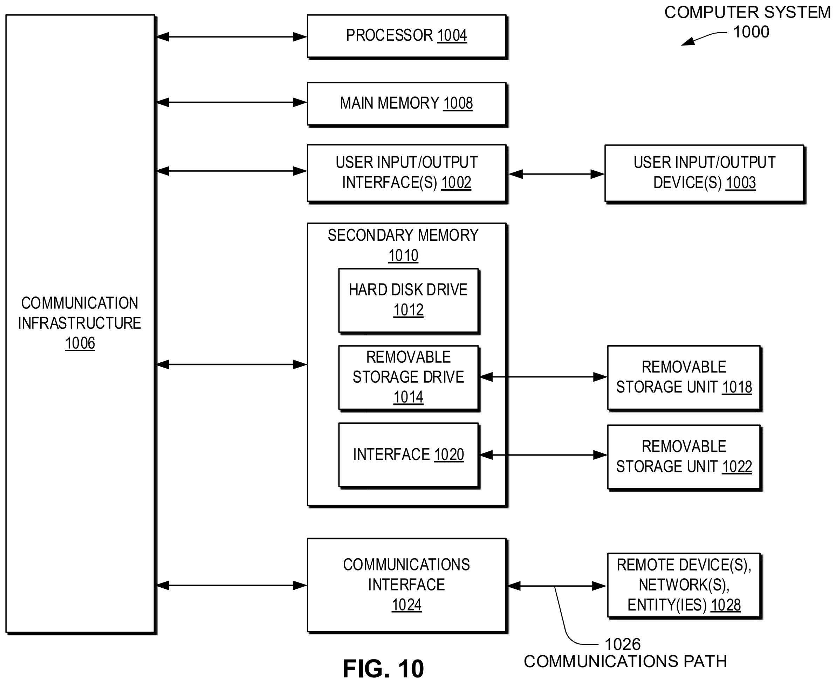

Various embodiments may be implemented, for example, using one or more classical computer systems, such as computer system 1000 shown in FIG. 10. One or more computer systems 1000 may be used, for example, to implement aspects of embodiments discussed herein, as well as combinations and sub-combinations thereof. One or more computer systems 1000 may be used, for example, to implement aspects of the misinformation detection model training and deployment method 100, the misinformation quantum feature selection method 200, the quantum misinformation detection model supervised training illustrated in FIG. 6, the quantum misinformation detection model production/testing illustrated in FIG. 7, and the quantum misinformation detection method 900 of FIG. 9. Other aspects can be implemented with one or more known quantum computing systems.

Computer system 1000 may include one or more processors (also called central processing units, or CPUs), such as a processor 1004. Processor 1004 may be connected to a communication infrastructure or bus 1006.

Computer system 1000 may also include user input/output device(s) 1003, such as monitors, keyboards, pointing devices, etc., which may communicate with communication infrastructure 1006 through user input/output interface(s) 1002.

One or more of processors 1004 may be a graphics processing unit (GPU), a tensor processing unit (TPU), or an AI processing unit (AIPU). In an embodiment, a GPU, TPU, or AIPU may be a processor that is a specialized electronic circuit designed to process mathematically intensive applications. The GPU, TPU, or AIPU may have a parallel structure that is efficient for parallel processing of large blocks of data, such as mathematically intensive data common to computer graphics or ML applications, images, videos, etc.

Computer system 1000 may also include a main or primary memory 1008, such as random access memory (RAM). Main memory 1008 may include one or more levels of cache. Main memory 1008 may have stored therein control logic (i.e., computer software) and/or data.

Computer system 1000 may also include one or more secondary storage devices or memory 1010. Secondary memory 1010 may include, for example, a hard disk drive 1012 and/or a removable storage device or drive 1014. Removable storage drive 1014 may be a floppy disk drive, a magnetic tape drive, a compact disk drive, an optical storage device, tape backup device, and/or any other storage device/drive.

Removable storage drive 1014 may interact with a removable storage unit 1018. Removable storage unit 1018 may include a computer usable or readable storage device having stored thereon computer software (control logic) and/or data. Removable storage unit 1018 may be a floppy disk, magnetic tape, compact disk, DVD, optical storage disk, and/ any other computer data storage device. Removable storage drive 1014 may read from and/or write to removable storage unit 1018.

Secondary memory 1010 may include other means, devices, components, instrumentalities or other approaches for allowing computer programs and/or other instructions and/or data to be accessed by computer system 1000. Such means, devices, components, instrumentalities or other approaches may include, for example, a removable storage unit 1022 and an interface 1020. Examples of the removable storage unit 1022 and the interface 1020 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1000 may further include a communication or network interface 1024. Communication interface 1024 may enable computer system 1000 to communicate and interact with any combination of external devices, external networks, external entities, etc. (individually and collectively referenced by reference number 1028). For example, communication interface 1024 may allow computer system 1000 to communicate with external or remote devices 1028 over communications path 1026, which may be wired and/or wireless (or a combination thereof), and which may include any combination of LANs, WANs, the internet, etc. Control logic and/or data may be transmitted to and from computer system 1000 via communication path 1026.

Computer system 1000 may also be any of a personal digital assistant (PDA), desktop workstation, laptop or notebook computer, netbook, tablet, smart phone, smart watch or other wearable, appliance, part of the internet of things (IoT), and/or embedded system, to name a few non-limiting examples, or any combination thereof.

Computer system 1000 may be a client or server, accessing or hosting any applications and/or data through any delivery paradigm, including but not limited to remote or distributed cloud computing solutions; local or on-premises software ("on-premises" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1000 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1000, main memory 1008, secondary memory 1010, and removable storage units 1018 and 1022, as well as tangible articles of manufacture embodying any combination of the foregoing. Such control logic, when executed by one or more data processing devices (such as computer system 1000), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 10. In particular, embodiments can operate with software, hardware, and/or operating system implementations other than those described herein.

### Conclusion

Misinformation undermines the ability to collectively address existential challenges of society. Misinformation detection methods, systems, and computer-readable media as described herein can thus be employed to help combat the spread and targeting of misinformation, as has been enabled by the internet at an unprecedented scale, posing fundamental challenges for humankind. The misinformation detection methods, systems, and computer-readable media as described herein can thus contribute to the urgent and effective collective action recognized as needed to combat misinformation.

Example misinformation detection methods, systems, and computer-readable media can advantageously make use of misinformation indicators of compromise, as described herein, for enhanced misinformation detection. For example, dark web threat indicators, authentication indicators, authorization indicators, and/or bad bot threat indicators can be derived from one or more datasets and incorporated into a training process for a misinformation detector model. The training process can also make use of quantum feature selection for more accurate detection of misinformation. The training process can make use of a quantum approximate optimization algorithm for optimization of misinformation feature selection. The inferencing process can make use of a quantum support vector machine for classification of misinformation. The inferencing process can make use of Grover's search algorithm for validation of misinformation content (e.g., text) against factual sources and databases.

Examples as described herein can combine the various techniques and advantages described above to provide stronger model-training techniques that result in improved identification of misinformation. As one example, misinformation detection methods and misinformation detector model training methods described herein improve over misinformation detection systems and methods that use combinations of binary classification models and classical machine-learning models for the purpose of misinformation detection. As another example, misinformation detector model training data collection and processing methods described herein improve over misinformation classifier training datasets that are based only on publicly available information datasets, and which does not take into account a broader set of cyber threat indicators that can enhance misinformation detection and prevention capabilities.

Benefits and advantages of the examples described herein include enhanced protection of an enterprise organization's brand from substantial threats triggered via abusive misinformation, such as disinformation. Other advantages of the examples described herein include enhanced misinformation detection capability via a more comprehensive training dataset. Additional advantages of the examples described herein include the use of quantum methods for faster misinformation classification model training and inferencing as compared to classical ML methods that may include classical machine-learning techniques, generative neural networks or classical SVMs. Additional advantages of the examples described herein include robustness to adversarial machine learning attacks, stronger generalization across modalities (text, video, audio, etc.), and faster classification through the use of a quantum database and Grover's search.

The Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

Further embodiments are set out in the following clauses:
1. A computer-implemented method of quantum misinformation detection comprising:
   receiving, by a computer processor, inferencing data comprising content comprising at least one of textual data, audio data, image data, or video data;
   deriving a data vector from one or more samples of the inferencing data;
   commanding quantum computing hardware to select a plurality of features of the data vector using a quantum approximate optimization algorithm (QAOA);
   commanding the quantum computing hardware or other quantum computing hardware to classify the inferencing data as one of misinformation or genuine information using a quantum support vector machine (QSVM) provided with the selected plurality of features of the data vector;
   receiving, by the computer processor, a signal based on the classification made by the quantum computing hardware or the other quantum computing hardware; and
   based on the signal indicating that the classification made by the QSVM is indicative that the content includes misinformation, generating a notification or alert to a human user or an automated system warning that the content includes misinformation.
2. The method of clause 1, wherein the QAOA is trained using labeled training data, the training of the QAOA comprising:
   selecting a subset of features of the labeled training data, the selecting comprising:
   encoding at least a portion of the labeled training data as a plurality of qubits;
   initializing the plurality of qubits in superposition with each other;
   applying a cost Hamiltonian to each of the plurality of qubits;
   applying a Hamiltonian mixer to each of the plurality of qubits;
   repeating the applying the cost Hamiltonian and the applying the Hamiltonian mixer to each of the plurality of qubits for a number of iterations;
   measuring a quantum state of the qubits to determine a feature selection vector;
   selecting the subset of features of the labeled training data based on the feature selection vector;
   providing the selected subset of features of the labeled training data to the QSVM to determine a training classification;
   determining a loss function at least in part by comparing the training classification to a label of the labeled training data;
   adjusting loss function minimization parameters of the QAOA based on the loss function; and
   repeating the selecting the subset of features of the labeled training data, the providing the selected subset of features of the labeled training data to the QSVM, the determining the loss function, and the adjusting the loss function minimization parameters a number of times.
3. The method of clause 2, wherein the number of times is equal to a number of binary elements in the data vector.
4. The method of clause 1, further comprising, before the commanding the quantum computing hardware to select the plurality of features of the data vector using the QAOA:
   commanding the quantum computing hardware or the other quantum computing hardware or still other quantum computing hardware to perform a Grover's search for the data vector, or another data vector based on the data vector, in a quantum database storing embeddings corresponding to information classified as misinformation; and
   determining that the data vector, or the other data vector based on the data vector, is not in the quantum database based on the Grover's search.
5. The method of clause 1, further comprising:
   based on the signal indicating that the classification made by the QSVM is indicative that the content includes misinformation, commanding the quantum computing hardware or the other quantum computing hardware or still other quantum computing hardware to perform a Grover's search for the data vector, or another data vector based on the data vector, in a quantum database storing embeddings corresponding to information classified as misinformation.
6. The method of clause 5, further comprising:
   based on determining that the data vector, or the other data vector based on the data vector, is not in the quantum database based on the Grover's search, storing the data vector, or the other data vector based on the data vector, in the quantum database.
7. The method of clause 1, wherein the content further comprises inferencing metadata associated with a source of the content.
8. A quantum misinformation detection system comprising:
   a memory; and
   at least one processor coupled to the memory and configured to perform operations comprising:
      receiving inferencing data comprising content comprising at least one of textual data, audio data, image data, or video data;
      deriving a data vector from one or more samples of the inferencing data;
      commanding quantum computing hardware to select a plurality of features of the data vector using a quantum approximate optimization algorithm (QAOA);
      commanding the quantum computing hardware or other quantum computing hardware to classify the inferencing data as one of misinformation or genuine information using a quantum support vector machine (QSVM) provided with the selected plurality of features of the data vector;
      receiving a signal based on the classification made by the quantum computing hardware or the other quantum computing hardware; and
      based on the signal indicating that the classification made by the QSVM is indicative that the content includes misinformation, generating a notification or alert to a human user or an automated system warning that the content includes misinformation.
9. The quantum misinformation detection system of clause 8, wherein the QAOA is trained using labeled training data, the training of the QAOA comprising:
   selecting a subset of features of the labeled training data, the selecting comprising:
   encoding at least a portion of the labeled training data as a plurality of qubits;
   initializing the plurality of qubits in superposition with each other;
   applying a cost Hamiltonian to each of the plurality of qubits;
   applying a Hamiltonian mixer to each of the plurality of qubits;
   repeating the applying the cost Hamiltonian and the applying the Hamiltonian mixer to each of the plurality of qubits for a number of iterations;
   measuring a quantum state of the qubits to determine a feature selection vector;
   selecting the subset of features of the labeled training data based on the feature selection vector;
   providing the selected subset of features of the labeled training data to the QSVM to determine a training classification;
   determining a loss function at least in part by comparing the training classification to a label of the labeled training data;
   adjusting loss function minimization parameters of the QAOA based on the loss function; and
   repeating the selecting the subset of features of the labeled training data, the providing the selected subset of features of the labeled training data to the QSVM, the determining the loss function, and the adjusting the loss function minimization parameters a number of times.
10. The quantum misinformation detection system of clause 9, wherein the number of times is equal to a number of binary elements in the data vector.
11. The quantum misinformation detection system of clause 8, wherein the operations further comprise, before the commanding the quantum computing hardware to select the plurality of features of the data vector using the QAOA:
   commanding the quantum computing hardware or the other quantum computing hardware or still other quantum computing hardware to perform a Grover's search for the data vector, or another data vector based on the data vector, in a quantum database storing embeddings corresponding to information classified as misinformation; and
   determining that the data vector, or the other data vector based on the data vector, is not in the quantum database based on the Grover's search.
12. The quantum misinformation detection system of clause 8, wherein the operations further comprise:
   based on the signal indicating that the classification made by the QSVM is indicative that the content includes misinformation, commanding the quantum computing hardware or the other quantum computing hardware or still other quantum computing hardware to perform a Grover's search for the data vector, or another data vector based on the data vector, in a quantum database storing embeddings corresponding to information classified as misinformation.
13. The quantum misinformation detection system of clause 12, wherein the operations further comprise:
   based on determining that the data vector, or the other data vector based on the data vector, is not in the quantum database based on the Grover's search, storing the data vector, or the other data vector based on the data vector, in the quantum database.
14. The quantum misinformation detection system of clause 8, wherein the content further comprises inferencing metadata associated with a source of the content.
15. A non-transitory computer-readable device having instructions stored thereon that, when executed by at least one computing device, cause the at least one computing device to perform operations comprising:
   receiving inferencing data comprising content comprising at least one of textual data, audio data, image data, or video data;
   deriving a data vector from one or more samples of the inferencing data;
   commanding quantum computing hardware to select a plurality of features of the data vector using a quantum approximate optimization algorithm (QAOA);
   commanding the quantum computing hardware or other quantum computing hardware to classify the inferencing data as one of misinformation or genuine information using a quantum support vector machine (QSVM) provided with the selected plurality of features of the data vector;
   receiving a signal based on the classification made by the quantum computing hardware or the other quantum computing hardware; and
   based on the signal indicating that the classification made by the QSVM is indicative that the content includes misinformation, generating a notification or alert to a human user or an automated system warning that the content includes misinformation.
16. The non-transitory computer-readable device of clause 15, wherein the QAOA is trained using labeled training data, the training of the QAOA comprising:
   selecting a subset of features of the labeled training data, the selecting comprising:
   encoding at least a portion of the labeled training data as a plurality of qubits;
   initializing the plurality of qubits in superposition with each other;
   applying a cost Hamiltonian to each of the plurality of qubits;
   applying a Hamiltonian mixer to each of the plurality of qubits;
   repeating the applying the cost Hamiltonian and the applying the Hamiltonian mixer to each of the plurality of qubits for a number of iterations;
   measuring a quantum state of the qubits to determine a feature selection vector;
   selecting the subset of features of the labeled training data based on the feature selection vector;
   providing the selected subset of features of the labeled training data to the QSVM to determine a training classification;
   determining a loss function at least in part by comparing the training classification to a label of the labeled training data;
   adjusting loss function minimization parameters of the QAOA based on the loss function; and
   repeating the selecting the subset of features of the labeled training data, the providing the selected subset of features of the labeled training data to the QSVM, the determining the loss function, and the adjusting the loss function minimization parameters a number of times.
17. The non-transitory computer-readable device of clause 16, wherein the number of times is equal to a number of binary elements in the data vector.
18. The non-transitory computer-readable device of clause 15, wherein the operations further comprise, before the commanding the quantum computing hardware to select the plurality of features of the data vector using the QAOA:
   commanding the quantum computing hardware or the other quantum computing hardware or still other quantum computing hardware to perform a Grover's search for the data vector, or another data vector based on the data vector, in a quantum database storing embeddings corresponding to information classified as misinformation; and
   determining that the data vector, or the other data vector based on the data vector, is not in the quantum database based on the Grover's search.
19. The non-transitory computer-readable device of clause 15, wherein the operations further comprise:
   based on the signal indicating that the classification made by the QSVM is indicative that the content includes misinformation, commanding the quantum computing hardware or the other quantum computing hardware or still other quantum computing hardware to perform a Grover's search for the data vector, or another data vector based on the data vector, in a quantum database storing embeddings corresponding to information classified as misinformation.
20. The non-transitory computer-readable device of clause 19, wherein the operations further comprise:
   based on determining that the data vector, or the other data vector based on the data vector, is not in the quantum database based on the Grover's search, storing the data vector, or the other data vector based on the data vector, in the quantum database.

The breadth and scope of this disclosure should not be limited by any of the above-described exemplary embodiments, but should be defined only in accordance with the following claims and their equivalents.

## Claims

1. A computer-implemented method of quantum misinformation detection comprising:
receiving, by a computer processor, inferencing data comprising content comprising at least one of textual data, audio data, image data, or video data;
deriving a data vector from one or more samples of the inferencing data;
commanding quantum computing hardware to select a plurality of features of the data vector using a quantum approximate optimization algorithm (QAOA);
commanding the quantum computing hardware or other quantum computing hardware to classify the inferencing data as one of misinformation or genuine information using a quantum support vector machine (QSVM) provided with the selected plurality of features of the data vector;
receiving, by the computer processor, a signal based on the classification made by the quantum computing hardware or the other quantum computing hardware; and
based on the signal indicating that the classification made by the QSVM is indicative that the content includes misinformation, generating a notification or alert to a human user or an automated system warning that the content includes misinformation.

2. The method of claim 1, wherein the QAOA is trained using labeled training data, the training of the QAOA comprising:
selecting a subset of features of the labeled training data, the selecting comprising:
encoding at least a portion of the labeled training data as a plurality of qubits;
initializing the plurality of qubits in superposition with each other;
applying a cost Hamiltonian to each of the plurality of qubits;
applying a Hamiltonian mixer to each of the plurality of qubits;
repeating the applying the cost Hamiltonian and the applying the Hamiltonian mixer to each of the plurality of qubits for a number of iterations;
measuring a quantum state of the qubits to determine a feature selection vector;
selecting the subset of features of the labeled training data based on the feature selection vector;
providing the selected subset of features of the labeled training data to the QSVM to determine a training classification;
determining a loss function at least in part by comparing the training classification to a label of the labeled training data;
adjusting loss function minimization parameters of the QAOA based on the loss function; and
repeating the selecting the subset of features of the labeled training data, the providing the selected subset of features of the labeled training data to the QSVM, the determining the loss function, and the adjusting the loss function minimization parameters a number of times.

3. The method of claim 2, wherein the number of times is equal to a number of binary elements in the data vector.

4. The method of claim 1, further comprising, before the commanding the quantum computing hardware to select the plurality of features of the data vector using the QAOA:
commanding the quantum computing hardware or the other quantum computing hardware or still other quantum computing hardware to perform a Grover's search for the data vector, or another data vector based on the data vector, in a quantum database storing embeddings corresponding to information classified as misinformation; and
determining that the data vector, or the other data vector based on the data vector, is not in the quantum database based on the Grover's search.

5. The method of claim 1, further comprising:
based on the signal indicating that the classification made by the QSVM is indicative that the content includes misinformation, commanding the quantum computing hardware or the other quantum computing hardware or still other quantum computing hardware to perform a Grover's search for the data vector, or another data vector based on the data vector, in a quantum database storing embeddings corresponding to information classified as misinformation.

6. The method of claim 5, further comprising:
based on determining that the data vector, or the other data vector based on the data vector, is not in the quantum database based on the Grover's search, storing the data vector, or the other data vector based on the data vector, in the quantum database.

7. The method of claim 1, wherein the content further comprises inferencing metadata associated with a source of the content.

8. A quantum misinformation detection system comprising:
a memory; and
at least one processor coupled to the memory and configured to perform operations comprising:
receiving inferencing data comprising content comprising at least one of textual data, audio data, image data, or video data;
deriving a data vector from one or more samples of the inferencing data;
commanding quantum computing hardware to select a plurality of features of the data vector using a quantum approximate optimization algorithm (QAOA);
commanding the quantum computing hardware or other quantum computing hardware to classify the inferencing data as one of misinformation or genuine information using a quantum support vector machine (QSVM) provided with the selected plurality of features of the data vector;
receiving a signal based on the classification made by the quantum computing hardware or the other quantum computing hardware; and
based on the signal indicating that the classification made by the QSVM is indicative that the content includes misinformation, generating a notification or alert to a human user or an automated system warning that the content includes misinformation.

9. The quantum misinformation detection system of claim 8, wherein the QAOA is trained using labeled training data, the training of the QAOA comprising:
selecting a subset of features of the labeled training data, the selecting comprising:
encoding at least a portion of the labeled training data as a plurality of qubits;
initializing the plurality of qubits in superposition with each other;
applying a cost Hamiltonian to each of the plurality of qubits;
applying a Hamiltonian mixer to each of the plurality of qubits;
repeating the applying the cost Hamiltonian and the applying the Hamiltonian mixer to each of the plurality of qubits for a number of iterations;
measuring a quantum state of the qubits to determine a feature selection vector;
selecting the subset of features of the labeled training data based on the feature selection vector;
providing the selected subset of features of the labeled training data to the QSVM to determine a training classification;
determining a loss function at least in part by comparing the training classification to a label of the labeled training data;
adjusting loss function minimization parameters of the QAOA based on the loss function; and
repeating the selecting the subset of features of the labeled training data, the providing the selected subset of features of the labeled training data to the QSVM, the determining the loss function, and the adjusting the loss function minimization parameters a number of times.

10. The quantum misinformation detection system of claim 9, wherein the number of times is equal to a number of binary elements in the data vector.

11. The quantum misinformation detection system of claim 8, wherein the operations further comprise, before the commanding the quantum computing hardware to select the plurality of features of the data vector using the QAOA:
commanding the quantum computing hardware or the other quantum computing hardware or still other quantum computing hardware to perform a Grover's search for the data vector, or another data vector based on the data vector, in a quantum database storing embeddings corresponding to information classified as misinformation; and
determining that the data vector, or the other data vector based on the data vector, is not in the quantum database based on the Grover's search.

12. The quantum misinformation detection system of claim 8, wherein the operations further comprise:
based on the signal indicating that the classification made by the QSVM is indicative that the content includes misinformation, commanding the quantum computing hardware or the other quantum computing hardware or still other quantum computing hardware to perform a Grover's search for the data vector, or another data vector based on the data vector, in a quantum database storing embeddings corresponding to information classified as misinformation.

13. The quantum misinformation detection system of claim 12, wherein the operations further comprise:
based on determining that the data vector, or the other data vector based on the data vector, is not in the quantum database based on the Grover's search, storing the data vector, or the other data vector based on the data vector, in the quantum database.

14. The quantum misinformation detection system of claim 8, wherein the content further comprises inferencing metadata associated with a source of the content.

15. A non-transitory computer-readable device having instructions stored thereon that, when executed by at least one computing device, cause the at least one computing device to perform the method according to any of claims 1 to 6.
